**Europäisches Patentamt**

**European Patent Office**

**Office européen des brevets**

(19)

(11) **EP 1 418 686 A2**

(12) **EUROPEAN PATENT APPLICATION**

(43) Date of publication:
**12.05.2004 Bulletin 2004/20**

(51) Int Cl.⁷: **H04B 7/26**

(21) Application number: **03025480.9**

(22) Date of filing: **06.11.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **06.11.2002 KR 2002068597
14.01.2003 KR 2003002526**

(71) Applicant: **SAMSUNG ELECTRONICS CO., LTD.
Suwon-City, Kyungki-do (KR)**

(72) Inventors:
• **Hwang, Sung-Oh, Samsung Electronics Co., Ltd.
Suwon-city Kyungki-do (KR)**

• **Lee, Kook-Heui, Samsung Electronics Co., Ltd.
Suwon-city Kyungki-do (KR)**
• **Choi, Sung-Ho, Samsung Electronics Co., Ltd.
Suwon-city Kyungki-do (KR)**
• **Cho, Ki-Ho, Samsung Electronics Co., Ltd.
Suwon-city Kyungki-do (KR)**
• **Lim, Chae-Man, Samsung Electronics Co., Ltd.
Suwon-city Kyungki-do (KR)**

(74) Representative: **Grünecker, Kinkeldey,
Stockmair & Schwanhäusser Anwaltssozietät
Maximilianstrasse 58
80538 München (DE)**

(54) **Paging method in a mobile communication system providing a multimedia broadcast/multicast service**

(57)     A method of paging UEs(User Equipments) on a multimedia broadcast/multicast service (MBMS) service basis in a mobile communication system supporting MBMS. To receive a PCH (Paging Channel) using a plurality of PICHs (Paging Indicator Channels) in a mobile communication system having a plurality of PCHs transmitted in every predetermined periods, for paging UEs requesting a broadcasting service, and the plurality of PICHs transmitted between first and second successive PCHs among the plurality of PCHs. A UE receives a PICH assigned to the UE if the PICH is among the plurality of PIs, determines whether the second PCH corresponding to the broadcasting service will be transmitted by a broadcasting service PI set in an unused part of the received PICH, and receives the second PCH destined commonly for all UEs that determine that the second PCH will be transmitted to the UEs among UEs that receive the PICH.

FIG.2

**Description**

**BACKGROUND OF THE INVENTION**

1. Field of the Invention

The present invention relates generally to a mobile communication system, and in particular, to a paging method for a multimedia broadcast/multicast service (MBMS).

2. Description of the Related Art

During the development in the telecommunications industry, CDMA (Code Division Multiple Access) mobile communication systems have evolved from providing a voice service to additionally providing multicast multimedia communications, which enable the transmission of a large volume of data such as packet data and circuit data. Consequently, a broadcast/multicast service is being actively developed in which one data source serves a plurality of UEs (User Equipments) to support the multicast multimedia communications. The broadcast/multicast service is categorized into cell broadcast service (CBS) being a message-centered service and MBMS supporting multimedia data such as real-time pictures and voice, still images, text, etc.

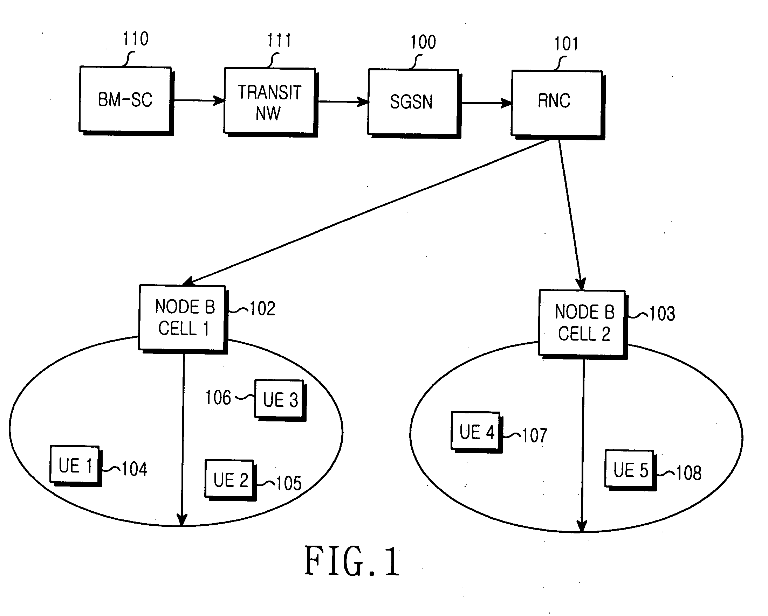

FIG 1 is a schematic view illustrating a configuration of a network for providing an MBMS service in a mobile communication system. Referring to FIG 1, a broadcast/multicast-service center (BM-SC) 110 serves as an MBMS stream source, and schedules MBMS streams and transmits them to a transit network (NW) 111. The transit NW 111, which is located between the BM-SC 110 and an SGSN (Serving GPRS Support Node) 100, transfers the MBMS streams to the SGSN 100. The SGSN 100 belongs to a core network (CN) and interfaces between a UTRAN (UMTS Terrestrial Radio Access Network) and the CN. The SGSN 100 controls MBMS-related services for MBMS subscribers, namely, UEs (User Equipments), such as management of MBMS-related billing data and selective transmission of MSMS service data to a particular RNC 101. The SGSN 100 creates an MBMS service context for MBMS service X and transmits MBMS streams for MBMS service X to the RNC 101. An MBMS service context is defined as a set of control information required to provide a specific MBMS service. The RNC 101 controls a plurality of Node Bs 102 and 103 (cell 1 and cell 2) and transmits MBMS service data to a Node B including a UE requesting MBMS service X. The RNC 101 also controls radio channels established for MBMS service X and creates/manages an RNC service context for MBMS service X using MBMS streams received from the SGSN 100. As illustrated in FIG 1, one radio channel is established for MBMS service X between a Node B and UEs within the coverage area of the Node B, for example, between the Node B 102 and UEs 104, 105, and 106 (UE 1, UE 2, and UE 3). An HLR (Home Location Register: not shown) is connected to the SGSN 100 and authenticates MBMS subscribers.

As described above, the RNC 101 and the SGSN 100 manage MBMS service information for each MBMS service. The MBMS service information is defined as an MBMS service context. The MBMS service context contains information about UEs that want to receive a particular MBMS service (i.e. the IDs of the UEs), the service areas of the UEs, and a QoS (Quality of Service) requirement for the MBMS service.

To provide a specific MBMS service, basic information about the MBMS service is provided to UEs. If the UEs want to receive the MBMS service, a list of the UEs requesting the service is transmitted to a network. The network then pages the UEs and establishes radio bearers (RBs) for the MBMS service. Thereafter, the MBMS service is provided to the UEs through the RBs. If the MBMS service is terminated, the UEs are informed of the MBMS service termination and correspondingly release all resources assigned for the MBMS service. This is a conventional MBMS service procedure.

As described above, providing the MBMS service involves transmission/reception of control messages between the network and the UEs. For transmission of the control messages, the network pages the UEs. However, currently, there is no paging process specified for providing the MBMS service. Therefore, a paging process for an MBMS service is needed.

**SUMMARY OF THE INVENTION**

It is, therefore, an object of the present invention to provide an MBMS paging method for paging UEs for an MBMS service in an MBMS mobile communication system.

It is another object of the present invention to provide a method of notifying a presence or absence of MBMS paging for individual MBMS services in an MBMS mobile communication system.

It is a further object of the present invention to provide a method of determining information necessary to receive MBMS paging information for an MBMS service in an RNC in an MBMS mobile communication system.

It is still another object of the present invention to provide a method of determining information necessary to receive MBMS paging information for an MBMS service in a CN in an MBMS mobile communication system.

It is yet another object of the present invention to provide a method of transmitting MBMS paging information and information necessary to transmit the MBMS paging information to a Node B in an RNC in an MBMS mobile communication system.

The above and other objects are achieved by a paging method for an MBMS service in a mobile communication system.

According to one aspect of the present invention, in a method of receiving a PCH (Paging Channel) using a plurality of PICHs (Paging Indicator Channels) in a mobile communication system having a plurality of PCHs transmitted at predetermined periods, for paging UEs requesting a broadcasting service, wherein the plurality of PICHs are transmitted between first and second successive PCHs among the plurality of PCHs, a UE receives a PICH assigned to the UE if the PICH is among the plurality of PICHs, determines whether the second PCH corresponding to the broadcasting service will be transmitted by a broadcasting service PI (Paging Indicator) set in an unused part of the received PICH, and receives the second PCH transmitted commonly for all UEs that determine that the second PCH will be transmitted to the UEs among UEs that receive the PICH.

According to another aspect of the present invention, in a method of notifying an initiation of a broadcasting service in an RNC in a mobile communication system that includes at least one UE, a cell having the at least one UE included within in a service area of the cell, and the RNC having including the cell within a service area of the RNC, for providing the broadcasting service through the cell, and providing reception time information indicating time to receive a notification message for paging the UE for the broadcasting service transmitted to the UE, wherein the notification message is transmitted to the UE according to the reception time information.

According to a further aspect of the present invention, in a method of transmitting paging information for a second service in a mobile communication system where a PICH signal is transmitted, the PICH signal having a first PI indicating paging for a first service and a second PI indicating paging for the second service, which is different from the first service, for providing the first and second services, an SGSN transmits to an RNC information about a paging interval at which the second service paging information is transmitted and an offset by which the second service paging information starts, upon request for the second service from a UE. The RNC transmits the PICH signal including the second PI to the UE, and retransmits to the UE the second service paging information a predetermined number of times from a transmission start point corresponding to the offset.

According to still another aspect of the present invention, in a method of receiving paging information for a second service in a mobile communication system where a PICH signal is received, the PICH signal having a first PI indicating paging for a first service and a second PI indicating paging for the second service different from the first service, for providing the first and second services, reception interval and offset information is received. The reception interval indicates an interval at which the second service paging information is received and an offset indicates a time when the second service paging information starts to be received. The PICH signal is received at a predetermined time and the second PI is detected from the PICH signal. The second service paging information is then received according to the reception interval and the offset information, if the second PI indicates the presence of the second service paging information.

**BRIEF DESCRIPTION OF THE DRAWINGS**

The above and other objects, features, and advantages of the present invention will become more apparent from the following detailed description when taken in conjunction with the accompanying drawings in which:

FIG 1 is a schematic view illustrating a network configuration for providing an MBMS service in a mobile communication system;
FIG 2 is a diagram illustrating a signal flow for transmitting/receiving control messages when an SGSN determines a PCH (Paging Channel) transmission interval and an offset according to an embodiment of the present invention;
FIG. 3 is a diagram illustrating a signal flow for transmitting/receiving control messages when an RNC determines PAGING_INTERVAL and OFFSET according to another embodiment of the present invention;
FIG. 4 illustrates a data frame format for delivering an MBMS PI (Paging Indicator) based on a lub frame protocol according to the present invention;
FIG 5 illustrates PICH (Paging Indicator Channel) and PCH receiving times at a UE according to the present invention;
FIG 6 is a flowchart illustrating a UE operation according to the present invention; and
FIG. 7 is a flowchart illustrating an RNC operation according to the present invention.

**DETAILED DESCRIPTION OF THE PREFERRED EMBODIMENTS**

Preferred embodiments of the present invention will be described in detail herein below with reference to the accompanying drawings. In the following description, well-known functions or constructions are not described in detail since they would obscure the invention in unnecessary detail.

The present invention proposes a paging method that enables a network, that is, a UTRAN (UMTS Terrestrial Radio Access Network), to minimize power consumption of a UE in an MBMS mobile communication system. The paging method is applicable to the UE irrespective of the state where the UE is placed, i.e., idle state, CELL_PCH state, or URA_PCH state.

(1) CELL_PCH state: The UE monitors a PICH without receiving other channels such as an FACH (Forward Access Channel). Before transmitting data to the UE, an RNC transitions the UE to a CELL_FACH state by paging. Similarly, the UE transitions to the CELL_FACH state before transmitting data to the RNC. The RNC tracks the location of the UE on a cell basis. RNC-determined DRX (Discontinuous Reception) parameters are used in the paging process.

(2) URA_PCH state: This state is the same as the CELL_PCH state except that the RNC tracks the location of the UE on a URA (UTRAN Registration Area) basis. A URA covers a plurality of cells.

(3) Idle state: The RNC has no knowledge of the position of the UE and can page it upon request from a CN. Except for the use of CN-determined DRX parameters, the paging is performed in the same manner as in the CELL_PCH state. An RRC (Radio Resource Control) Connection Setup must precede transmission/reception of data between the RNC and the UE.

In a typical paging process, a UE periodically receives a PICH signal from a Node B and determines from the PICH signal whether there is a PCH signal to be transmitted to the UE. Information about the PICH is delivered to the UE in a system information block (SIB) of a BCH (Broadcast Channel). By checking the BCH, the UE can obtain the PICH information and thus receive the PICH signal. The paging process is a whole process of the network's paging the UE. To minimize the power consumption of the UE, the network pages the UE by DRX. The DRX scheme refers to reception of a paging message only at a time preset between the UE and the network, in which the UE turns on the receiver for paging message reception. Thus, the UE turns on its receiver only at the preset time according to the DRX scheme and turns off the receiver at the other times. More specifically, the UE receives the PICH signal at a paging occasion (PO) and receives a paging message on a PCH, if a PI for the UE is 1 in the PICH signal.

However, if the typical paging process is applied to MBMS paging, the network must transmit the same information repeatedly for a predetermined time to alert a plurality of UEs to the presence of control information about an MBMS service. Consequently, the transmission power of the Node B is wasted. In this context, the transmission interval of the PCH (i.e. paging interval, PAGING_INTERVAL) and an offset (OFFSET) indicating a start of PCH transmission are not determined periodically, but adaptively. That is, PAGING_INTERVAL and OFFSET are adaptively determined according to the MBMS services.

As described above, a plurality of UEs receive a Notification message prior to receiving an MBMS service. The Notification message is a type of MBMS paging message. In the present invention, it is assumed that the Notification message is delivered on the PCH. Because continuous transmission of the Notification message from a Node B to the UEs causes power consumption in the Node B, the offset (OFFSET) of the PCH, that is, the reception start point of the PCH and the repeated transmission points of the PCH (PAGING_INTERVAL) are notified to the UEs. In addition, because the UEs can repeatedly receive the PCH according to the information about the PCH, the reliability of the Notification message on the PCH is increased. PAGING_INTERVAL and OFFSET can be determined in two ways. One of the two ways is that an SGSN determines the MBMS paging control information. The other is that an RNC determines the MBMS paging control information. Here, PAGING_INTERVAL and OFFSET are called MBMS paging control information.

The case where the SGSN determines PAGING_INTERVAL and OFFSET will first be described herein below.

The SGSN determines PAGING_INTEVAL and OFFSET on an MBMS service basis or on an RA (Routing Area) basis. The SGSN can define PAGING_INTEVAL and OFFSET as a function of TMGI (Temporary Multicast Group Identity), or sets them to values predetermined for each MBMS service. TMGI is an ID (Identity) identifying a specific MBMS service and thus MBMS service-specific. The TMGI is assigned when an MBMS service context for the MBMS service is initially generated and released when the MBMS service is terminated. Although there are no rules specified for TMGI assignment, the SGSN assigns a different TMGI to each MBMS service within the SGSN.

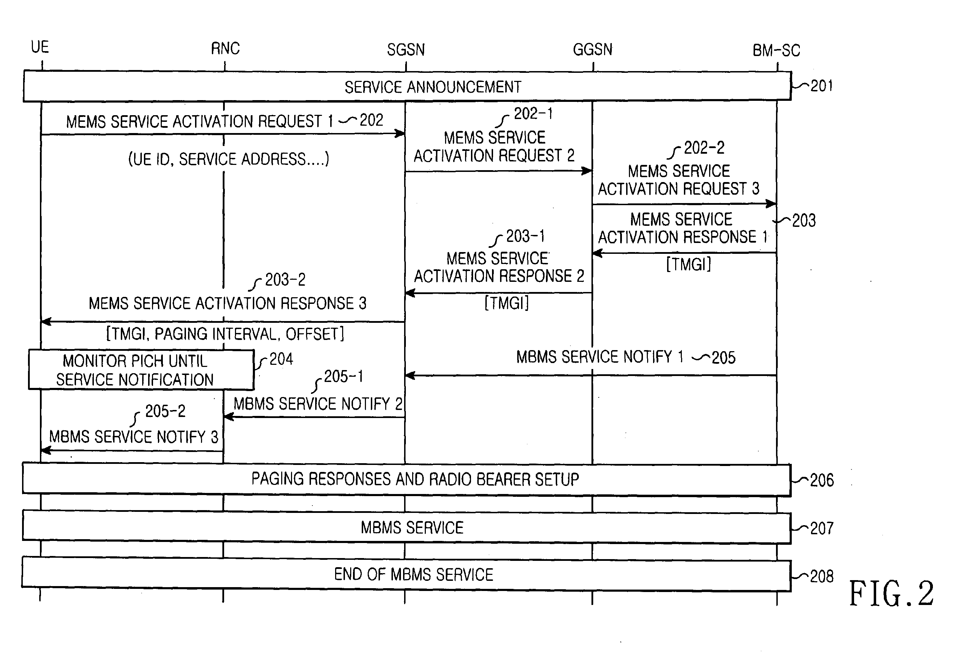

The SGSN transmits PAGING_INTERVAL and OFFSET to UEs by an MBMS SERVICE ACTIVATION RESPONSE message, which will be described later with reference to FIG. 2.

The SGSN determines a paging occasion (PO) using PAGING_INTERVAL and OFFSET by Equation (1):

$$SFN(PO)=TMGI\_KmodPAGING\_INTERVAL+n*PAGING\_INTERVAL \qquad (1)$$

where n=1, 2, 3, . . . , SFN(PO)<4095, TMGI_K=TMGI div K, and PAGING_INTERVAL=$2^{PAGING\_INTERVAL\_COEFF}$. The SFN (System Frame Number) is an integer that increases from 0 to 4095, that is, frame timings counted in a Node B. In the MBMS mobile communication system, one radio frame is 10msec in duration. The variable K in TMGI_K is the number of S-CCPCHs/PCHs (Secondary Common Control Physical Channels/PCHs). An S-CCPCH/PCH is an S-CCPCH to which the PCH is mapped.

As noted from Equation (1), MBMS PO is a set of SFNs in which the PCH delivers the Notification message for the MBMS service. The PAGING_INTERVAL_COEF is one of 0 to 9, determining PAGING_INTERVAL. The TMGI_K mod PAGING_INTERVAL sets a different OFFSET for each TMGI, that is, each MBMS service. Therefore, OFFSET can be determined as a TMGI function as in Equation (1), or preset as a specific value. In the latter case, the preset value must be indicated to the UEs along with PAGING_INTERVAL.

Next, the case where the RNC determines PAGING_INTERVAL and OFFSET will be described.

The RNC determines PAGING_INTERVAL and OFFSET according to a load of the UTRAN and channel condition. In addition, the RNC determines them on a cell basis. The PAGING_INTERVAL and OFFSET are delivered to UEs on a BCCH (Broadcast Control Channel) mapped to a BCH or FACH. The RNC can determine PAGING_INTERVAL and OFFSET by Equation (1) like the SGSN.

FIG 2 is a diagram illustrating a signal flow for determining PAGING_INTERVAL and OFFSET in the SGSN according to an embodiment of the present invention. The following description presupposes that a network of the present invention, that is, connections among a BM-SC, a GGSN (Gateway GPRS Support Node), an SGSN, and an RNC, and UEs are formed as illustrated in FIG 1.

Referring to FIG 2, a CN (defined as covering the BM-SC, the GGSN, and the SGSN) notifies UEs of current available MBMS services along with their basic information as menu information in step 201 (Service Announcement). The menu information contains the action times and durations of the MBMS services. For example, the time when a specific TV program is initiated and the duration of the TV program are found in the menu information. The CN broadcasts the menu information to preset service areas, for example, by CBS, or transmits it only to UEs requesting MBMS services. The CN also notifies the UEs of MBMS service IDs identifying the respective MBMS services by the menu information. Because the service announcement is not directly related to the present invention, its detailed description is not provided here.

Upon receipt of the menu information, each of the UEs selects an intended MBMS service in the menu information and transmits to the SGSN via the RNC a first MBMS SERVICE ACTIVATION REQUEST message (MBMS SERVICE ACTIVATION REQUEST 1) in step 202. The MBMS SERVICE ACTIVATION REQUEST 1 includes the MBMS service ID indicating the selected MBMS service and the ID of the UE. The SGSN detects the MBMS service ID and stores the UE ID in an MBMS service context corresponding to the MBMS service ID. The SGSN then transmits to the GGSN a second MBMS SERVICE ACTIVATION REQUEST message (MBMS SERVICE ACTIVATION REQUEST 2) in step 202-1. Upon receipt of MBMS SERVICE ACTIVATION REQUEST 2, the GGSN stores the IDs of the UE and the RNC in an MBMS service context corresponding to the MBMS service and transmits to the BM-SC a third MBMS SERVICE ACTIVATION REQUEST message (MBMS SERVICE ACTIVATION REQUEST 3) in step 202-2.

The BM-SC stores the ID of the GGSN in an MBMS service context for the MBMS service and assigns a TMGI to the MBMS service. The BM-SC then transmits to the GGSN a first MBMS SERVICE ACTIVATION RESPONSE message (MBMS SERVICE ACTIVATION RESPONSE 1) containing the MBMS service ID indicating the MBMS service and the assigned TMGI in step 203. In step 203-1, the GGSN transmits to the SGSN a second MBMS SERVICE ACTIVATION RESPONSE message (MBMS SERVICE ACTIVATION RESPONSE 2) containing the MBMS service ID and the TMGI. Upon receipt of MBMS SERVICE ACTIVATION RESPONSE 2, and the SGSN determines PAGING_INTERVAL and OFFSET using the TMGI by Equation (1). The SGSN then transmits to the UE via the RNC a third MBMS SERVICE ACTIVATION RESPONSE message (MBMS SERVICE ACTIVATION RESPONSE 3) containing PAGING_INTERVAL, OFFSET, the MBMS service ID, and the TMGI in step 203-2. The UE detects PAGING_INTERVAL, OFFSET, the MBMS service ID, and the TMGI from MBMS SERVICE ACTIVATION RESPONSE 3. The UE monitors a PICH signal. If the PICH signal indicates that the requested MBMS service will start, the UE receives a PCH according to PAGING_INTERVAL and OFFSET.

More specifically, a DRX parameter is preset to support a sleep mode for the UE. Therefore, in step 204, the UE receives the PICH signal at every predetermined PO according to the DRX parameter and determines whether the requested MBMS service will start by checking an unused part of the PICH signal. In a conventional PICH slot format, one radio frame of the PICH is 10ms in duration and divided into 300 areas, $b_0$ to $b_{299}$. Specifically, one PICH radio frame includes 288 PI bits, $b_0$ to $b_{288}$ and 12 reserved bits, $b_{289}$ to $b_{299}$. The reserved areas are used for MBMS paging in the present invention.

In other words, the 12 reserved bits are divided into several groups and an MBMS PI is assigned to each group, to thereby indicate the presence or absence of paging information for a UE-requested MBMS service. In this case, the UE must have knowledge of the group having an MBMS PI for its requested MBMS service.

In accordance with the present invention, the mapping relation between a TMGI indicating an MBMS service and the ID of an MBMS PI indicating the presence or absence of MBMS service paging information is defined in Equation (2):

$$MBMSPI=TMGImodN_{mp} \qquad\qquad (2)$$

where $N_{mp}$ is a quotient of dividing 12 (the number of the reserved bits) by the number of groups and $12/N_{mp}$ bits are assigned to each group. Hence, $N_{mp}$ is the number of MBMS PIs. There are 1, 2, 3, 4, 6, or 12 groups. For example, if $N_{mp}$ is 1, 12 bits are assigned to one MBMS PI for a specific MBMS service. Before checking an MBMS PI for its requested MBMS service, the UE must know the present $N_{mp}$. $N_{mp}$ can be received on a BCH delivering the system information of the UTRAN or on an FACH.

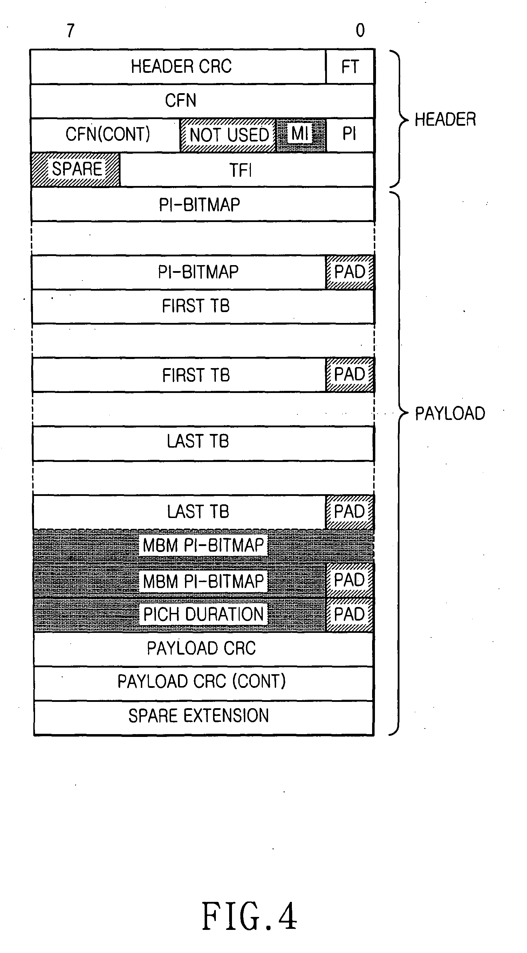

The UE monitors the PICH signal using an MBMS PI calculated by Equation (2) to determine the presence or absence of paging information for the requested MBMS service. Transmission of information indicating the presence of the MBMS PI to the UE will be described later in connection with FIG 4. If the UE determines from the MBMS PI that the intended MBMS service will start, the receives a corresponding PCH signal according to PAGING_INTERVAL and OFFSET.

In step 205, the BM-SC transmits to the SGSN a kind of paging message, a first MBMS SERVICE NOTIFY message (MBMS SERVICE NOTIFY 1) indicating the immediate initiation of the MBMS service. The MBMS SERVICE NOTIFY 1 includes the MBMS service ID. In step 205-1, the SGSN transmits to the RNC a second MBMS SERVICE NOTIFY message (MBMS SERVICE NOTIFY 2) indicating the immediate initiation of the MBMS service. The MBMS SERVICE NOTIFY 2 includes the TMGI of the MBMS service. In step 205-2, the RNC transmits to the UE a third MBMS SERVICE NOTIFY message (MBMS SERVICE NOTIFY 3) indicating the immediate initiation of the MBMS service. The MBMS SERVICE NOTIFY 3, including the TMGI of the MBMS service, is delivered on the PCH.

After detecting the immediate start of the MBMS service, the UE transmits to the CN a Paging Response in response to MBMS SERVICE NOTIFY 3 and is assigned radio resources from which to receive the MBMS service in a radio resource allocation procedure in step 206. The radio resource allocation procedure includes a radio bearer setup in which the RNC transmits to UEs requesting an MBMS service within each cell information about radio bearers on which the MBMS service is provided in the cell (radio bearer setup) and a radio link setup step in which the RNC transmits to the cells having the UEs information about transport bearers on Iub interfaces.

Upon completion of the radio resource allocation procedure, all UEs requesting the MBMS service acquire information about radio links on which the MBMS service is provided and information about higher layers. The cells having the UEs within their coverage areas complete setup of the radio links and Iub interfaces. When the RNC and the UEs finish preparing for the MBMS service, the CN transmits MBMS service data to the UEs via the RNC in step 207. If the MBMS service data is completely transmitted, the established radio resources, that is, the transport bearers and radio bearers between the UEs and the CN, are released (End of MBMS Service) in step 208.

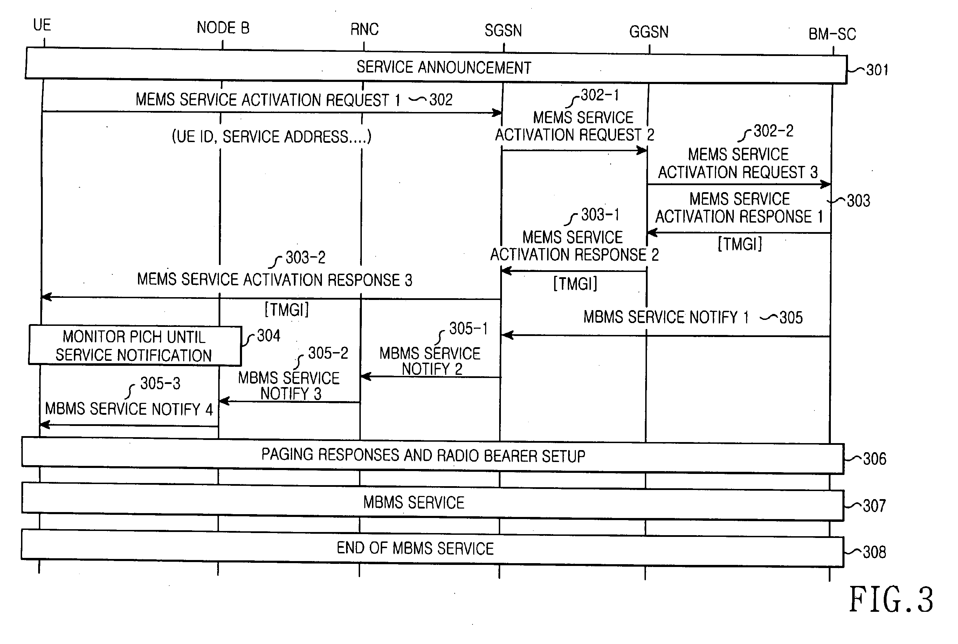

Alternatively, FIG 3 is a diagram illustrating a signal flow for transmission and reception of control messages when the RNC determines PAGING_INTERVAL and OFFSET according to another embodiment of the present invention.

Referring to FIG 3, the CN first performs a service announcement by notifying MBMS subscribing UEs of basic information about currently available MBMS services (e.g. menu information) in step 301. The service announcement is performed in the same manner as its counterpart illustrated in FIG 2. Each of the UEs, if they want a specific MBMS service, transmit MBMS SERVICE ACTIVATION REQUEST 1, which requests the MBMS service, to the SGSN through the RNC in step 302. MBMS SERVICE ACTIVATION REQUEST 1 includes the ID of the UE and an MBMS service ID indicating the MBMS service. The SGSN detects the MBMS service ID and stores the ID of the UE in an MBMS service context corresponding to the MBMS service ID. The SGSN then transmits to the GGSN MBMS SERVICE ACTIVATION REQUEST 2 in step 302-1. Upon receipt of MBMS SERVICE ACTIVATION REQUEST 2, the GGSN stores the IDs of the UE and the RNC in an MBMS service context corresponding to the MBMS service and transmits MBMS SERVICE ACTIVATION REQUEST 3 to the BM-SC in step 302-2.

The BM-SC stores the ID in an MBMS service context for the MBMS service and assigns a TMGI to the MBMS service. The BM-SC then transmits to the GGSN MBMS SERVICE ACTIVATION RESPONSE 1 containing the MBMS service ID indicating the MBMS service and the assigned TMGI in step 303. In step 303-1, the GGSN transmits to the SGSN MBMS SERVICE ACTIVATION RESPONSE 2 containing the MBMS service ID and the TMGI. The SGSN transmits MBMS SERVICE ACTIVATION RESPONSE 3 to the UE via the RNC in step 303-2. The UE detects the MBMS service ID and the TMGI from MBMS SERVICE ACTIVATION RESPONSE 3.

The UE monitors a PICH signal at a PO corresponding to a preset DRX parameter and checks the presence or absence of general paging for the UE. At the same time, the UE determines whether the MBMS service will start by checking an MBMS PI in the unused part of the PICH signal in step 304. If the PICH signal indicates that the requested MBMS service will start, the UE receives a PCH according to PAGING_INTERVAL and OFFSET.

Notably, the RNC determines PAGING_INTERVAL and OFFSET on a cell basis according to UTRAN load and channel condition, and then delivers them to the UEs on a BCHor on an FACH. If PAGING_INTERVAL and OFFSET are changed, the RNC transmits the changed PAGING_INTERVAL and OFFSET to the UEs on the BCH or FACH.

The BM-SC transmits to the SGSN MBMS SERVICE NOTIFY 1 containing the MBMS service ID in step 305. In step 305-1, the SGSN transmits to the RNC MBMS SERVICE NOTIFY 2 indicating the immediate initiation of the MBMS service. The MBMS SERVICE NOTIFY 2 includes the TMGI of the MBMS service. In step 305-2, the RNC transmits to the Node B MBMS SERVICE NOTIFY 3 indicating the immediate initiation of the MBMS service. The Node B in turn transmits MBMS SERVICE NOTIFY 4 to the UE in step 305-3. That is, the UE monitors the PICH signal at every predetermined PO and determines whether its requested MBMS service will start by checking the assigned MBMS PI in the unused part of the PICH signal. In the case of the immediate initiation of the MBMS service, the UE receives a PCH signal according to PAGING_INTERVAL and OFFSET. The subsequent steps 306, 307, and 308 are performed in the same manner as steps 206, 207, and 208 illustrated in FIG 2. Therefore, their detailed description is not again provided here.

The RNC notifies the Node B of PAGING_INTERVAL and OFFSET by a frame protocol, so that the Node B transmits the PCH signal to the UEs in correspondence with PAGING_INTERVAL and OFFSET. To support transmission of the PICH having MBMS PIs, a novel data frame based on an lub frame protocol between the RNC and the Node B is defined as illustrated in FIG 4.

FIG. 4 illustrates the format of an lub frame protocol-based data frame to demonstrate how MBMS PIs are transmitted by the lub frame protocol according to the present invention. Referring to FIG 4, the data frame based on the lub frame protocol is modified to a novel structure relative to a typical lub frame protocol-based data frame in order to support transmission of MBMS PIs in an unused area of the data frame.

More specifically, the RNC transmits PIs for a conventional PCH in the lub frame protocol-based data frame to the Node B. In the present invention, the RNC further transmits MBMS PIs to the Node B in the unused part of the data frame. Therefore, FIG 4 illustrates a novel lub frame protocol-based data frame having MBMS PI bitmaps and MI (MBMS Indication) indicating the presence or absence of MBMS PI bitmap payload. If MI is 0, it indicates the absence of an MBMS PI bitmap. If MI is 1, it indicates the presence of an MBMS PI bitmap. In this case, a PICH is assigned to the MBMS PI bitmap to indicate a PCH corresponding to an MBMS service. Therefore, 1, 2, 3, 4, 6, or 12 MBMS PI groups can exist. An MBMS PI bitmap is 2 bytes, and it may represent the number of UEs to be paged in connection with the MBMS PI. PICH DURATION, which indicates how long the PICH lasts.

Information required to transmit the PICH and the PCH by the lub frame protocol can be transmitted to the Node B in two ways.

In a first method, the RNC transmits to the Node B PAGING_INTERVAL and OFFSET related to transmission of the PICH and PCH by the frame protocol. When the PICH and MBMS PCH are to be transmitted, the RNC transmits MBMS PI information related to the PICH and PAGING_INTERVAL and OFFSET related to the PCH to the Node B by the lub frame protocol-based data frame. The Node B then maps the PICH and PCH to physical channels, that is, the PICH and S-CCPCH according to PAGING_INTERVAL and OFFSET. In this case, PICH DURATION need not be transmitted. Because only PAGING_INTERVAL is controlled, it may occur that only the PICH is transmitted.

In a second method, the RNC transmits to the Node B a message indicating a predetermined repetition time for the Node B to repeat transmission of the PICH after the present PICH transmission, together with PAGING_INTERVAL and OFFSET. The Node B then transmits the PCH for delivering the Notification message according to PAGING_INTERVAL and OFFSET, and also repeats the PICH transmission the predetermined number of times after the present PICH transmission. Consequently, the repeated PICH transmission reduces RNC load.

To support transmission of a MBMS PCH, an MBMS paging message for supporting MBMS paging must be added to a conventional paging type 1 message. Although the MBMS paging message can be configured as a novel message, it is assumed that the MBMS paging message is modified from or added to the conventional paging type 1 message in the present invention.

Information elements (IEs) for MBMS paging added to the paging type 1 message will be described below.

Terminating MBMS Call and TMGI are added respectively to IE Paging Cause and to IE UE identity in the conventional paging type 1 message. When the UE receives this paging message, the UE determines from Terminating MBMS Call that the paging message indicates the immediate initiation of an MBMS service. Though TMGI is not a real UE ID, it identifies the MBMS service that the UE wants to receive. Thus, the paging message notifies the UE of MBMS paging through Terminating MBMS Call and of an MBMS service to be provided through TMGI.

In addition, MBMS radio bearer information can further be added to the paging type 1 message. The MBMS radio bearer information covers Layer 2 (L2) information and Layer 1 (L1) information. The L2 information may include RLC (Radio Link Control)/PDCP (Packet Data Convergence Protocol) information. The L1 information can include information about TFS (Transport Format Set), TFCS (Transport Format Combination Set), channelization code, transmit power, and activation time.

The conventional paging type 1 message has BCCH modification information. The PAGING_INTERVAL and OFFSET determined and changed by the RNC can be delivered to the UE by the BCCH modification information.

In the case where the RNC changes the number of PCH transmissions and transmits only once the paging information about an MBMS service that a particular UE requests, it is impossible to obtain the MBMS paging information if the PCH transmission is completed before the time the UE is expected to receive the PCH signal. Therefore, the RNC transmits the PCH signal for MBMS paging a predetermined number of times and a new IE is added to the paging type 1 message to indicate how many times the PCH signal will further be transmitted. Let's call this IE by "Paging RES(Paging Residue)". The UE estimates the repetition number of PCH transmission after the present transmission, to thereby avoid repeated demodulation of previously received MBMS paging information.

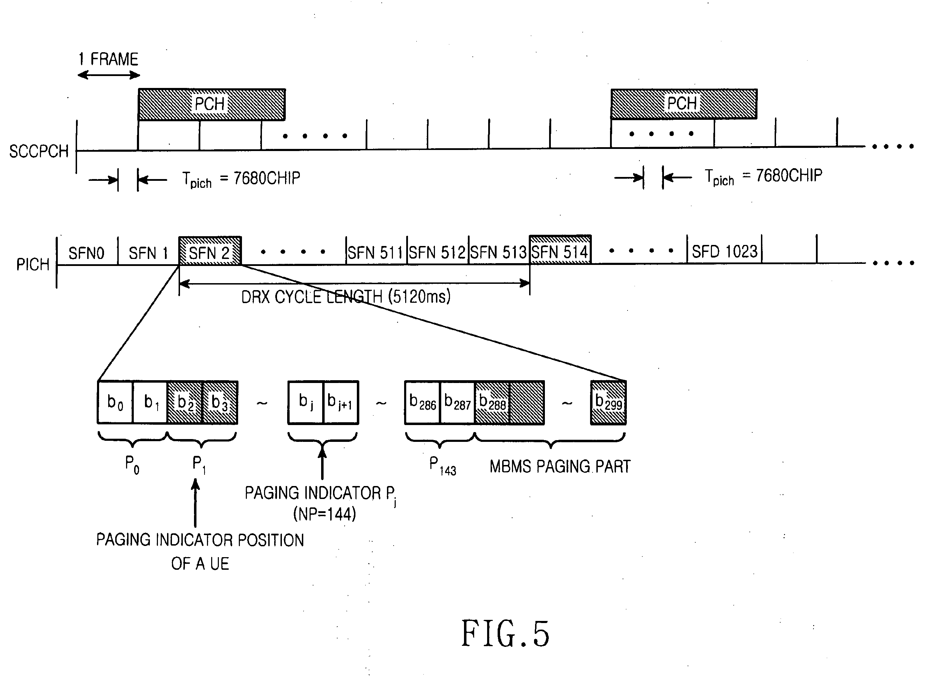

FIG 5 is a diagram schematically illustrating times when the UE receives the PICH and PCH signals according to the embodiment of the present invention. Here, a UE DRX cycle length is 5.12 seconds and an MBMS PCH is transmitted every 512 frames.

Referring to FIG 5, the UE activates to monitor PIs at a corresponding PO in a PICH radio frame at time SFN 2. The PIs are PIs for the conventional PCH and an MBMS PIs in an unused part of the PICH, for the MBMS PCH. Accordingly, the UE demodulates the PIs. It is assumed in FIG 5 that the PI for the conventional PCH is demodulated to -1, indicating the absence of the typical PCH signal for the UE, and the MBMS PI indicates the immediate start of an MBMS service that the UE wants to receive, that is, indicates the presence of the MBMS PCH for the UE. Therefore, the UE prepares for receiving the MBMS PCH.

Because the present MBMS PCH for the UE has already been transmitted, the UE transitions to an idle state to await the next MBMS PCH signal. If the time from the present time to the transmission of the next MBMS PCH is long, the UE transitions to a sleep mode and wakes up (activates) in time to receive the next MBMS PCH signal. Because the next MBMS PCH reception time almost coincides with the PI monitoring time, more exactly, the PI monitoring time slightly precedes the MBMS PCH receiving time, the UE stays in the sleep state until the PI monitoring time. If the next conventional PI is demodulated to 1, the UE demodulates not only the conventional PCH signal but also the MBMS PCH signal.

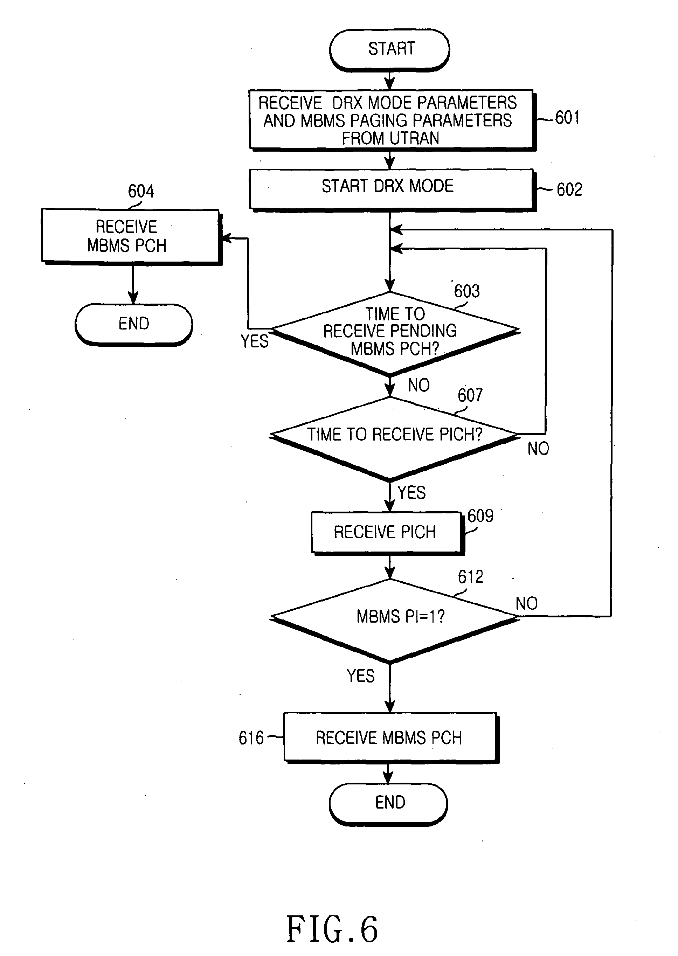

FIG 6 is a flowchart illustrating the UE operation according to an embodiment of the present invention. Referring to FIG 6, the UE first receives DRX parameters such as a DRX cycle length and an OVSF (Orthogonal Variable Spreading Factor) code used for the PICH, and MBMS paging parameters (i.e. PAGING_INTERVAL and OFFSET) in step 601. In step 602, the UE starts a DRX operation according to the DRX parameters. The DRX operation refers to reception of the PICH signal according to the DRX parameters and transitioning to a sleep mode for the remaining periods other than a PICH reception period.

In step 603, the UE determines whether it is time to receive an MBMS PCH signal related to the previous PICH, that is, a pending MBMS PCH signal. If it is time to receive the pending MBMS PCH signal, the UE receives the MBMS PCH signal in step 604. However, if it is not time to receive the pending MBMS PCH signal in step 603, the UE determines whether it is time to receive the PICH signal in step 607. If it is not time to receive the PICH signal, the UE returns to step 603. However, if it is time to receive the PICH signal in step 607, the UE receives the PICH signal and demodulates the PICH signal in step 609.Wherein, the PICH signal is comprised of a PICH part for Normal Paging of UE and a MBMS PICH part which is described in the present invention. Accordingly, the UE checks PICH for the Normal Paging and then, PICH for MBMS Paging at the point of monitoring PICH. The MBMS Paging is illustrated in FIG 6, but the Normal Paging is not described since it would be obvious for a person in the art.

After receiving the PICH signal in step 609, the UE determines whether a corresponding MBMS PI is 1 in an unused part of the PICH signal in step 613. If the MBMS PI is not 1, the UE returns to step 603. However, if the MBMS PI is 1, the UE receives and demodulates the MBMS PCH signal in step 616, and then terminates the procedure in step 616. At this time, the UE determines whether an MBMS PCH signal is to be received soon. Because the UE already has knowledge of PAGING_INTERVAL and OFFSET, it can estimate time to receive the MBMS PCH signal. In addition, "soon" indicates a short time for the DRX operation to be benefitable. If the MBMS PCH signal is not received soon, the UE returns DRX operation.. If the MBMS PCH signal is received soon, the UE receives and demodulates the MBMS PCH signal.

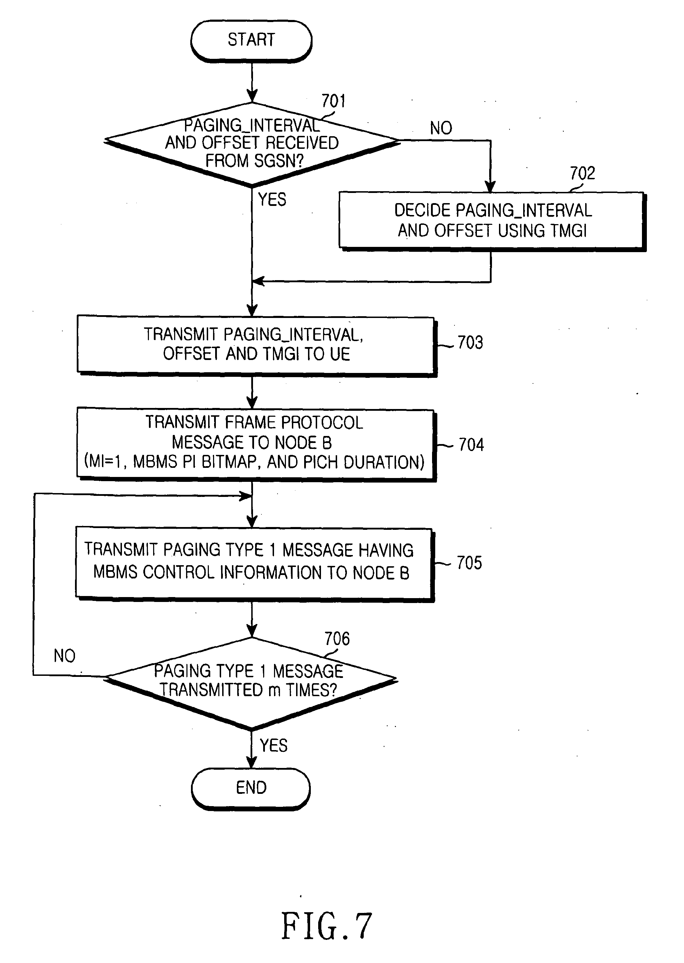

FIG. 7 is a flowchart illustrating the RNC operation according to an embodiment of the present invention. It is assumed herein that the RNC operation starts after the RNC receives MBMS-related messages from the SGSN as described with reference to FIGs. 2 and 3. More specifically, in the case where the SGSN determines PAGING_INTERVAL and OFFSET as depicted in FIG 2, the RNC operation starts after the RNC receives a TMGI identifying a specific MBMS service, a UE ID, PAGING_INTERVAL, and OFFSET. On the other hand, in the case where the RNC determines PAGING_INTERVAL and OFFSET as depicted in FIG 3, the RNC operation starts after the RNC receives only the TMGI and UE ID.

Referring to FIG. 7, the RNC determines whether PAGING_INTERVAL and OFFSET have been received from the SGSN in step 701. If they have not, the RNC proceeds to step 702. As described with reference to FIG 3, in the case where the RNC determines PAGING_INTERVAL and OFFSET, the answer to step 701 is NO, naturally. In step 702, the RNC calculates PAGING_INTERVAL and OFFSET using the received TMGI by Equation (1) and proceeds to step 703. Upon receipt of PAGING_INTERVAL and OFFSET in step 701, the RNC also proceeds to step 703. When the SGSN is responsible for determining PAGING_INTERVAL and OFFSET, it is determined in step 701 that the RNC has received PAGING_INTERVAL and OFFSET.

The RNC transmits PAGING_INTERVAL, OFFSET, and TMGI to the UE in step 703. The RNC sets MI to 1 in an lub frame protocol-based data frame to transmit PAGING_INTERVAL and OFFSET, assigns an MBMS PI corresponding to the TMGI in an MBMS PI bitmap, sets PICH DURATION, and transmits the data frame to the Node B in step 704. The MI indicates the presence or absence of an MBMS PI bitmap in the payload of the data frame, the MBMS PI bitmap represents values indicating MBMS PIs, and PICH DURAION indicates the transmission period of the MBMS PI. Steps 703 and 704 may occur simultaneously, or at different times.

In step 705, the RNC transmits the paging type 1 message of the present invention to the Node B so that the UE can receive the PCH according to PAGING_INTERVAL and OFFSET. As described above, the inventive paging type 1 message further includes Terminating MBMS Call indicating the immediate start of an MBMS service in IE Paging Cause, TMGI in IE UE Identity, and Paging RES IE indicating the remaining repetition number of transmission of the same MBMS paging information, as compared to the conventional paging type 1 message. The number of transmissions of the paging type 1 message can be preset, for example, to m.

In step 706, the RNC determines whether the paging type 1 message has been transmitted m times. If the paging type 1 message has not been transmitted m times, the RNC returns to step 705 and repeatedly transmits the MBMS paging information. However, if the paging type 1 message has been transmitted m times in step 706, the RNC then terminates the procedure. In accordance with the present invention, the PCH can be transmitted a plurality of times during the PICH duration. Therefore, m may be set according to PICH DURATION and OFFSET in the RNC, or preset in the system.

According to the present invention as described above, a UE monitors a PICH signal according to DRX parameters and determines whether there is MBMS paging for the UE by checking an MBMS PI in the unused part of the PICH signal. Therefore, a UTRAN does not need to continuously transmit an MBMS PCH signal that delivers a Notification message for an MBMS service, and the UE receives the PCH signal only when the MBMS PI indicates the presence of MBMS paging for the UE, minimizing power consumption. In addition, the paging interval and offset of the PCH is different for each MBMS service, to thereby enable a plurality of UEs to efficiently receive MBMS paging information at appropriate times.. Finally, repeated transmission of the MBMS paging information ensures the reliability of the MBMS paging information.

While the present invention has been shown and described with reference to certain preferred embodiments thereof, it will be understood by those skilled in the art that various changes in form and details may be made therein without departing from the spirit and scope of the present invention as defined by the appended claims.

**Claims**

1. A method of receiving a paging channel (PCH) using a plurality of paging indicator channels (PICHs) in a user equipment (UE) in a mobile communication system wherein a plurality of PCHs are transmitted at predetermined periods, for paging UEs requesting a broadcasting service, and the plurality of PICHs are transmitted between first and second successive PCHs among the plurality of PCHs, the method comprising the steps of:

   receiving a PICH assigned to the UE, if the PICH is among the plurality of PICHs;
   determining whether the second PCH corresponding to the broadcasting service will be transmitted by a broadcasting service paging indicator (PI) set in an unused part of the received PICH; and
   receiving the second PCH to be transmitted commonly for all UEs that determine that the second PCH will be transmitted to the UEs among UEs that receive the PICH.

2. The method of claim 1, wherein the PICH is assigned by a DRX (Discontinuous Reception) parameter.

3. A method of notifying an initiation of a broadcasting service in a radio network controller (RNC) in a mobile communication system that includes at least one user equipment (UE), a cell including the UE within a service area of the cell, and the RNC having at least one cell including the cell within a service area of the RNC, for providing broadcasting services through the at least one cell, the method comprising the steps of:

transmitting reception time information to a UE for indicating a time to receive a notification message for paging the UE for a broadcasting service; and
transmitting the notification message to the UE according to the reception time information.

**4.** The method of claim 3, wherein the reception time information includes information about a time for the UE to start receiving the notification message, and a transmission interval at which the UE receives the notification message, if the notification message is to be repeated a predetermined number of times.

**5.** The method of claim 3, wherein the notification message is a paging message, and the RNC transmits a paging indicator message to the UE prior to transmitting the paging message.

**6.** The method of claim 5, wherein the paging indicator message includes a paging indicator for indicating the transmission of the paging message for the broadcasting service.

**7.** The method of claim 4, wherein the reception time information is determined using an identity (ID) assigned to the broadcasting service.

**8.** The method of claim 7, wherein the reception time information is determined by

$$SFN(PO)=TMGI\_KmodPAGING\_INTERVAL+n*PAGING\_INTERVAL$$

where PAGING_INTERVAL is a transmission interval at which the UE receives the repeated notification message, $2^{PAGING\_INTERVAL\_COEFF}$, PAGING_IINTERVAL_COEFF is one of integers 0 to 9, n is a positive integer (n=1, 2, . . .), TMGI (Temporary Multicast Group Identity) is the ID of the broadcasting service, and K is a number of physical channels established in the cell of the UE, for delivering the notification message.

**9.** A method of identifying an initiation of a broadcasting service in a user equipment (UE) in a mobile communication system including a cell, a plurality of UEs within the cell, a radio network controller (RNC) for providing broadcasting services to the plurality of UEs through the cell, and a core network (CN) communicating with the RNC, for providing the broadcasting services, the method comprising the steps of:

receiving from the RNC information about a paging interval at which the UE receives a paging message indicating the initiation of the broadcasting service and an offset by which the UE starts receiving the paging message; and
receiving the paging message according to the paging interval and the offset.

**10.** A method of notifying an initiation of a broadcasting service in a mobile communication system including a cell, a plurality of user equipments (UEs) within the cell, a radio network controller (RNC) for providing broadcasting services to the plurality of UEs through the cell, and a core network (CN) communicating with the RNC, for providing the broadcasting services, the method comprising the steps of:

transmitting, from the CN to UEs that have requested the broadcasting service, reception time information indicating a time to receive a notification message indicating the initiation of the broadcasting service by a response message for the broadcasting service request from the UEs; and
receiving the notification message according to the reception time information in the UEs.

**11.** The method of claim 10, wherein the CN further transmits an ID for identifying the broadcasting service by the response message.

**12.** The method of claim 10, wherein the reception time information includes information about a time for the UEs to start receiving the notification message, and a transmission interval at which the UEs receive the notification message, if the notification message is to be repeated a predetermined number of times.

**13.** The method of claim 12, wherein the reception time information is determined using the ID of the broadcasting service.

**14.** The method of claim 13, wherein the reception time information is determined by

$$SFN(PO)=TMGI\_KmodPAGING\_INTERVAL+n*PAGING\_INTERVAL$$

where PAGING_INTERVAL is the transmission interval at which the UEs receive the repeated notification message, $2^{PAGING\_INTERVAL\_COEFF}$, PAGING_IINTERVAL_COEFF is one of integers 0 to 9, n is a positive integer (n=1, 2, . . .), TMGI (Temporary Multicast Group Identity) is the ID of the broadcasting service, and K is a number of physical channels established in the cell of the UEs, for delivering the notification message.

**15.** A method of transmitting paging information for a second service in a mobile communication system where a paging indicator channel (PICH) signal is transmitted, the PICH signal having a first paging indicator (PI) indicating paging for a first service and a second PI indicating paging for the second service, for providing the first and second services, the method comprising the steps of:

transmitting information about a paging interval at which the second service paging information is transmitted and an offset by which the second service paging information starts; and
retransmitting the second service paging information a predetermined number of times from a transmission start point corresponding to the offset.

**16.** The method of claim 15, wherein the paging interval and the offset are determined for each second service.

**17.** The method of claim 15, further comprising the step of transmitting the paging interval and the offset information to UEs requesting the second service on a common channel.

**18.** The method of claim 15, further comprising the step of transmitting the paging interval and the offset information to a Node B that provides the second service, by a data frame based on a frame protocol.

**19.** The method of claim 18, wherein the data frame includes information about a transmission duration of the PICH signal according to the paging interval and an ID identifying the second service.

**20.** A method of transmitting paging information for a second service in a mobile communication system where a paging indicator channel (PICH) signal is transmitted, the PICH signal having a first paging indicator (PI) indicating paging for a first service and a second PI indicating paging for the second service, which is different from the first service, for providing the first and second services, the method comprising the steps of:

transmitting from an SGSN (Supporting GPRS Support Node) to an RNC (Radio Network Controller) information about a paging interval at which the second service paging information is transmitted and an offset by which the second service paging information starts, upon a request for the second service from a user equipment (UE);
transmitting the PICH signal including the second PI from the RNC to the UE; and
retransmitting from the RNC to the UE the second service paging information a predetermined number of times from a transmission start point corresponding to the offset.

**21.** The method of claim 20, wherein the paging interval and the offset are determined for each second service.

**22.** The method of claim 21, wherein the paging interval and the offset are determined according to a function of a service ID identifying the second service.

**23.** The method of claim 22, wherein the function is expressed as

$$SFN(PO)=TMGI\_KmodPAGING\_INTERVAL+n*PAGING\_INTERVAL$$

where PAGING_INTERVAL is the transmission interval at which a UE receives a repeated notification message, $2^{PAGING\_INTERVAL\_COEFF}$, PAGING_INTERVAL_COEFF is one of integers 0 to 9, n is a positive integer (n=1, 2, . . .), TMGI (Temporary Multicast Group Identity) is an ID of the broadcasting service, and K is a number of physical channels established in the cell of the UE, for delivering the second service paging information.

**24.** The method of claim 21, wherein the paging interval and the offset are set to predetermined values.

**25.** The method of claim 20, further comprising the step of transmitting from the RNC to the UE the paging interval and the offset information on a common channel.

**26.** The method of claim 20, further comprising the step of transmitting from the RNC to a Node B the paging interval and the offset information by a data frame based on a frame protocol.

**27.** The method of claim 26, wherein the data frame includes information about a transmission duration of the PICH signal according to the paging interval and an ID identifying the second service.

**28.** A method of receiving paging information for a second service in a mobile communication system where a paging indicator channel (PICH) signal is received, the PICH signal having a first paging indicator (PI) indicating paging for a first service and a second PI indicating paging for the second service different from the first service, for providing the first and the second services, the method comprising the steps of:

receiving information about a reception interval at which the second service paging information is received and an offset by which the second service paging information starts to be received;
receiving the PICH signal at a predetermined time and detecting the second PI from the PICH signal; and
receiving the second service paging information according to the reception interval and the offset information, if the second PI indicates the presence of the second service paging information.

**29.** The method of claim 28, wherein if the reception start point corresponding to the offset from a time when the second PI is detected has already elapsed, the second service paging information is received at a next reception start point in the second service paging information receiving step.

**30.** The method of claim 28, wherein the reception interval and the offset information is determined according to a channel condition for each cell.

**31.** A method of transmitting paging information for a second service to provide a first service and the second service in a mobile communication system where a first service PI indicating the presence of the first service, which is different from the second service, and a first service paging information bitmap indicating a transmission position of paging information for the first service are transmitted by a frame protocol message, the method comprising the steps of:

generating the frame protocol message including a second service indication indicating the presence of a second service paging information bitmap and the second service paging information bitmap having a second service PI indicating the presence of the second service paging information, if it is determined that the second service paging information is to be transmitted; and
transmitting the generated frame protocol message to a Node B.

**32.** The method of claim 31, wherein the frame protocol message further includes information about the transmission position of the second service paging information.

**33.** The method of claim 31, wherein it is determined that the second service paging information is to be transmitted when a response for a second service activation request is received from an SGSN (Serving GPRS Support Node).

FIG.1

EP 1 418 686 A2

FIG.2

FIG.3

EP 1 418 686 A2

7                                                    0

| HEADER CRC | FT |
|---|---|
| CFN | |
| CFN(CONT) | NOT USED | MI | PI |
| SPARE | TFI |

HEADER

| PI-BITMAP |
|---|

| PI-BITMAP | PAD |
|---|---|
| FIRST TB | |

| FIRST TB | PAD |
|---|---|

| LAST TB |
|---|

| LAST TB | PAD |
|---|---|
| MBM PI-BITMAP | |
| MBM PI-BITMAP | PAD |
| PICH DURATION | PAD |
| PAYLOAD CRC | |
| PAYLOAD CRC (CONT) | |
| SPARE EXTENSION | |

PAYLOAD

# FIG.4

1 FRAME

SCCPCH

PCH · · · · PCH · · · ·

$T_{pich}$ = 7680CHIP  $T_{pich}$ = 7680CHIP

PICH | SFN0 | SFN 1 | SFN 2 | · · · · · | SFN 511 | SFN 512 | SFN 513 | SFN 514 | · · · · | SFD 1023 | · · · ·

DRX CYCLE LENGTH (5120ms)

$b_0$ | $b_1$ | $b_2$ | $b_3$  ~  $b_j$ | $b_{j+1}$  ~  $b_{286}$ | $b_{287}$ | $b_{288}$  ~  $b_{299}$

$P_0$    $P_1$    $P_{143}$    MBMS PAGING PART

PAGING INDICATOR $P_j$
(NP=144)

PAGING INDICATOR POSITION
OF A UE

FIG.5

START

RECEIVE DRX MODE PARAMETERS
AND MBMS PAGING PARAMETERS
FROM UTRAN — 601

START DRX MODE — 602

604

RECEIVE
MBMS PCH

END

603

TIME TO
RECEIVE PENDING
MBMS PCH?

YES

NO

607

TIME TO RECEIVE PICH?

NO

YES

RECEIVE PICH — 609

612

MBMS PI=1?

NO

YES

616 — RECEIVE MBMS PCH

END

FIG.6

START

PAGING_INTERVAL
AND OFFSET RECEIVED
FROM SGSN? — 701

NO

DECIDE PAGING_INTERVAL
AND OFFSET USING TMGI — 702

YES

TRANSMIT PAGING_INTERVAL,
OFFSET AND TMGI TO UE — 703

TRANSMIT FRAME PROTOCOL
MESSAGE TO NODE B
(MI=1, MBMS PI BITMAP, AND PICH DURATION) — 704

TRANSMIT PAGING TYPE 1 MESSAGE HAVING
MBMS CONTROL INFORMATION TO NODE B — 705

NO

PAGING TYPE 1 MESSAGE
TRANSMITTED m TIMES? — 706

YES

END

# FIG.7